# EUROPEAN PATENT SPECIFICATION

(11) **EP 1 431 350 B1**
(45) Date of publication and mention of the grant of the patent: **27.02.2008**
(21) Application number: 03029323.7
(22) Date of filing: 18.12.2003
(51) Int. Cl.: C09B 69/10, A61F 2/16, G02C 7/04

(54) **Colorant for ocular lenses and colored ocular lens using the colorant**
Farbstoff für Okularlinsen sowie mit diesem Farbstoff gefärbte Linse
Colorant pour lentilles oculaires et lentille oculaire colorée au moyen de ce colorant

(30) Priority: 20.12.2002 JP 2002370424
(43) Date of publication of application: 23.06.2004
(73) Proprietor: Nidek Co., Ltd., Gamagori-shi, Aichi (JP)
(72) Inventor: Nakahata, Yoshihiro, Gamagori-shi Aichi (JP); Nishimura, Shigeru, Kashiwa-shi Chiba (JP); Sunada, Tsutomu, Toyohashi-shi Aichi (JP); Miki, Sadao, Kyoto-shi Kyoto (JP); Kuwahara, Masaki, Kyoto-shi Kyoto (JP)
(74) Representative: Weber, Joachim

(56) References cited:
- EP-A- 0 359 829
- EP-A- 1 043 365
- US-A- 3 984 199
- US-A- 5 662 707

## Description

### FIELD OF THE INVENTION

The present invention relates to a colorant for ocular lenses such as contact lenses and intraocular lenses and a colored ocular lens with the use of this colorant.

### BACKGROUND OF THE INVENTION

There have been known colored intraocular lenses in which transmission of rays in the blue region of about 400 nm to 500 nm is regulated for relieving retinal light damage or as a countermeasure against cyanopsia following the insertion of an intraocular lens. In these colored intraocular lenses, materials for intraocular lenses are colored in yellow, orange, etc. by kneading a yellow colorant, an orange colorant, etc. into hard intraocular lens materials such as PMMA. There is also proposed an invention providing a soft intraocular lens for treating cyanopsia which is obtained by adding a small amount of a colorant to a flexible and soft material for intraocular lenses to give a colored soft intraocular lens (see, JP-A-7-24052).

US.A.5,662,707 discloses the use of dimethacrylic azo yellow dyes N-(4,-phenylazo)phenyl-2-bis-(2-methacryloy)ethylamine as polymerizable dyes in intraocular lenses.

Because of having dense molecular structures, hard intraocular lens materials such as PMMA scarcely suffer from the elution (bleeding) of the colorants having been kneaded thereinto. In the case of adding a colorant to a soft intraocular lens material to be used in soft intraocular lenses, however, there arises a problem that the colorant would be eluted from the soft intraocular lens material due to the coarse molecular structure thereof.

### SUMMARY OF THE INVENTION

A technical problem to be solved by the invention, which has been made to solve those problems occurring in the conventional techniques, is to provide a colorant for ocular lenses which can be used without the problem of the elution and a colored ocular lens with the use of this colorant.

The present inventors have found out that compounds represented by the following formula (1): 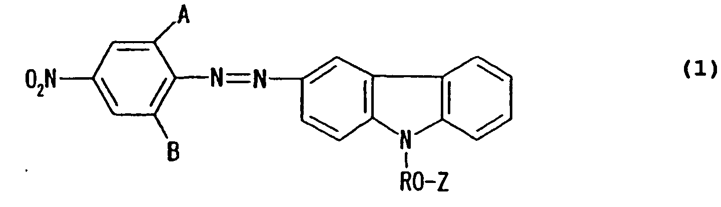 wherein A and B are each selected from the group consisting of halogens, a cyano group, a nitro group, alkyl groups, alkylsulfonyl groups and alkoxy groups; R represents a linear or branched alkylene having 1 to 5 carbon atoms; and Z is selected from the group consisting of a (meth)acryl group, a vinyl group, an allyl group and a chemical structure having such a polymerizable group;
are appropriately usable as colorants for ocular lenses such as contact lenses and intraocular lenses.

In the case of using alkyl groups as A and B in the formula (1), use may be made of alkyl groups having 1 to 5 carbon atoms such as methyl, ethyl, propyl, butyl and pentyl. The alkylsulfonyl groups and the alkoxy groups have the same carbon atom numbers. It is particularly appropriate to use a compound wherein A and B are each Cl and Z is a (meth)acryl group.

Since the colorant according to the invention carries a functional group having a carbon-carbon double bond in Z in the formula (1) as described above, it would polymerize with an ocular lens material for intraocular lenses or contact lenses. As a result, the elution of the colorant can be inhibited. Owing to this characteristic, the colorant according to the invention can be appropriately used particularly in coloring soft ocular lenses. In the invention, furthermore, there are relatively bulky groups A and B in the neighborhood of the nitrogen-nitrogen (azo) double bond in the formula (1). Thus, the cleavage of the nitrogen double bond by an external energy can be inhibited and thus the colorant is further stabilized. As a result, it is expected that the light fastness is improved.

### BRIEF DESCRIPTION OF THE DRAWINGS

### [Fig. 1]

It shows the transmittance curve of the plate produced in Example 1.

### DETAILED DESCRIPTION OF THE INVENTION

Modes for the embodiment of the invention will be illustrated.

### <Production of colorant for ocular lens>

First, a mode for the embodiment of synthesizing a compound represented by the formula (1) according to the invention to be used as a colorant for ocular lenses will be illustrated.

First, a compound (carbazole) represented by the following formula (2): 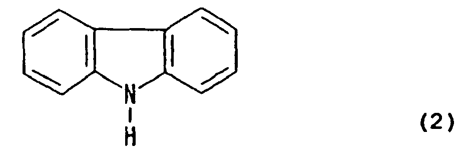 is mixed with an organic solvent such as methyl ethyl ketone or dioxane in the coexistence of a base and the mixture is refluxed while stirring at a predetermined temperature.

While refluxing the mixture as described above, a compound represented by the following formula (3):

Cl-ROH (3)

wherein R represents a linear or branched alkylene having 1 to 5 carbon atoms which may be substituted by Cl or Br; is dropped into the above mixture and reacted. Thus, a compound represented by the following formula (4): 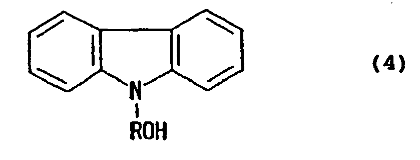 is obtained.

On the other hand, conc. sulfuric acid is added to glacial acetic acid. To the mixture thus obtained, sodium nitrite (NaNO₂) is added. Then a compound represented by the following formula (5): 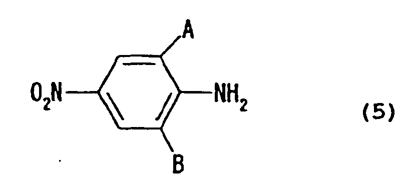 wherein A and B are each selected from the group consisting of halogens, a cyano group, a nitro group, alkyl groups, alkylsulfonyl groups and alkoxy groups and A and B may be either the same or different;
is slowly added to the mixture as described above to give a diazotized solution. Next, this diazotized solution thus obtained is added to a mixture prepared by dissolving the compound of the formula (4) in a mixture of methanol with water and reacted. Thus, a compound represented by the following formula (6): 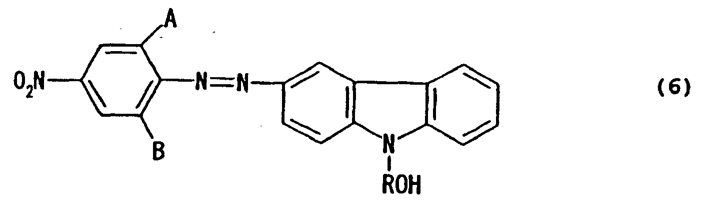 is obtained.

The compound represented by the formula (6) thus obtained and a compound represented by the following formula (7):

Z-X (7)

wherein Z is selected from the group consisting of a (meth) acryl group, a vinyl group, an allyl group and a chemical structure having such a polymerizable group; and X represents a halogen; are dissolved together with a dehydrohalogenation agent in a solvent such as dry benzene and reacted. Thus, a polymerizable colorant represented by the formula (1) can be obtained. As the dehydrohalogenation agent, use may be appropriately made of, for example, pyridine, N,N-dimethylaniline, triethylamine, triethylenediamine, etc.

### <Production of colored intraocular lens>

Next, a method of producing a colored intraocular lens with the use of the colorant represented by the formula (1) which is obtained above will be described.

As the intraocular lens material to be employed in this embodiment, use can be made of those conventionally employed. It is particularly suitable to use an intraocular lens material which is soft and flexible at room temperature. Examples of such a soft intraocular lens material include linear, branched and cyclic alkyl (meth)acrylate such as
methyl (meth) acrylate, ethyl (meth) acrylate, propyl (meth)acrylate, n-butyl (meth)acrylate, tert-butyl (meth)acrylate, isobutyl (meth)acrylate, n-pentyl (meth)acrylate, tert-pentyl (meth)acrylate, hexyl (meth)acrylate, 2-methylbutyl (meth)acrylate, heptyl (meth)acrylate, octyl (meth)acrylate, 2-ethylhexyl (meth)acrylate, nonyl (meth)acrylate, decyl (meth)acrylate, dodecyl (meth)acrylate, stearyl (meth)acrylate, cyclopentyl (meth) acrylate, cyclohexyl (meth) acrylate and ethylene glycol phenyl ether acrylate. A copolymer obtained by using one or more of them can be used as a soft acrylic base material. The term "- - - (meth) acrylate" as used herein means either "- - - acrylate" or "- - - methacrylate".

In the case where it is intended to obtain a soft intraocular lens material having hydrophilic surface, use can be made of, for example, the following substances.

N-Vinyllactams such as N-vinylpyrrolidone, α-methylene-N-methylpyrrolidone and N-vinylcaprolactam; hydroxyl group-containing (meth)acrylates such as hydroxyethyl (meth)acrylate, hydroxypropyl (meth)acrylate, hydroxybutyl (meth) acrylate, dihydroxypropyl (meth)acrylate, dihydroxydibutyl (meth) acrylate, diethylene glycol mono(meth)acrylate, triethylene glycol mono(meth)acrylate and dipropylene glycol mono(meth)acrylate; (meth)acrylic acid; (meth)acrylamide, N-methyl(meth)acrylamide, N-ethyl(meth)acrylamide, N-hydroxyethyl(meth)acrylamide, N,N-dimethyl(meth)acrylamide, N,N-diethyl(meth)acrylamide, N-ethylaminoethyl(meth)acrylamide and the like.

It is also possible to use copolymers thereof, for example, combinations such as a copolymer of ethyl methacrylate with methyl methacrylate, a copolymer of 2-ethylhexyl methacrylate with butyl methacrylate and a copolymer of 2-ethylhexyl methacrylate with dodecyl methacrylate.

To produce a soft base material which has been colored with the use of such a soft intraocular lens material, the above-described (meth) acrylate employed as the main material may be blended with various vinyl-based copolymerizable monomers so as to achieve the desired hardness, repulsion and release speed of the intraocular lens. After further adding a crosslinking agent, a polymerization initiator, an UV absorber and the colorant obtained by the above-described synthesis, the mixture is put into a mold form or a reactor and then polymerized. Due to this polymerization, the colorant is copolymerized with the soft intraocular lens material such as a (meth)acrylate. Thus, the colorant is hardly eluted from the soft base material.

The colorant is added preferably in an amount of from about 0.001% by weight to 0.1% by weight, still preferably from about 0.005% by weight to 0.05% by weight, based on the total amount of the colored soft base material for intraocular lenses. In the case where the colorant is added in an amount smaller than the above-described ratio, the colored soft base material thus obtained has only a light color and the desired effect of the addition of the colorant cannot be established. In the case where the colorant is added in an amount exceeding the above-described ratio, the colored soft base material thus obtained has an excessively dark color and becomes impractical.

Since the soft base material should remain soft and flexible at room temperature, the blending ratio of various (meth)acrylate-based monomers to be copolymerized is determined so as to give a soft base material preferably having a glass transition temperature of 10°C or lower, still preferably 5°C or lower.

As the crosslinking agent to be used in the polymerization, use can be made of crosslinking agents typified by ethylene glycol di(meth)acrylate, 1,4-butanediol di(meth)acrylate, 1,6-hexanediol di(meth)acrylate, etc. As the polymerization initiator, it is preferable to use 2,2-azobisisobutyronitrile, azobisdimethylvaleronitrile, benzoin, methyl-orthobenzoyl benzoate, etc.

As preferable examples of the UV absorber, benzotriazole UV absorbers of the coupling type typified by 2-(2'-hydroxy-5'-methacryloxyethylphenyl)-2H-benzotriazole, benzophenone UV absorbers of the coupling type typified by 2-hydroxy-5-glycidyl benzophenone, etc. may be cited.

The polymerization is carried out via the heat polymerization, the UV polymerization or the like, though it varies depending on the polymerization initiator added. The colored soft base material thus obtained is hardened by, for example, freezing, to such an extent as allowing cutting. Then it is cut into a desired shape. Thus, a colored soft intraocular lens can be obtained. Alternatively, a colored soft intraocular lens can be obtained by introducing the main material, the crosslinking agent, the polymerization initiator, the UV absorber and the colorant into a mold form and then polymerizing and hardening the mixture.

Although a soft base material which is flexible at room temperature is employed as a material to be colored in this embodiment, the invention is not restricted thereto. Namely, the colorant according to the invention is also usable in an intraocular lens made of a hard base material which is non-flexible at room temperature. The colorant according to the invention is usable not only in intraocular lenses but also in other ocular lenses such as contact lenses.

### EXAMPLES

### (Example 1)

16 g of carbazole, 14 g of sodium hydroxide and 7 ml of purified water were mixed with 80 ml of methyl ethyl ketone and the resultant mixture was heated and refluxed under stirring for 30 minutes. While refluxing the mixture, 13 ml of 2-chloroethanol was dropped therein over 1 hour. After refluxing the resultant mixture for additional 3 hours, 8 g of sodium hydroxide was added thereto. While refluxing the resultant mixture, 13 ml of 2-chloroethanol was dropped thereinto over 1 hour. Next, the resultant mixture was refluxed for 24 hours. Then the reaction mixture was cooled to room temperature by allowing to stand, poured into 3 L of purified water and extracted with ether. After removing the ether with an evaporator, the unreacted carbazole was filtered off. From the viscous reaction mixture thus obtained, N-(2-hydroxyethyl)carbazole was isolated by column chromatography (silica gel/benzene). The yield was 20%.

Subsequently, 4.5 g of conc. sulfuric acid was slowly added to 5.0 g of glacial acetic acid. While maintaining the resultant mixture at 50°C over a hot water bath, 0.4 g of sodium nitrite was slowly added thereto under stirring. After heating to 70°C, the resultant mixture was cooled to 10°C over an ice water bath. Then 0.98 g of 2,6-dichloro-4-nitroaniline was slowly added thereto under stirring. Next, 5.0 g of glacial acetic acid and 7 ml of ice water were added and thus the resultant mixture was diazotized under stirring.

In a mixture comprising 20 ml of methanol with 5 ml of purified water, 1. 0 g of N-hydroxyethylcarbazole was dissolved. The diazotized solution described above was added under stirring to the mixture containing N-hydroxyethylcarbazole dissolved therein and the resultant mixture was stirred at room temperature for 1 hour. After adding 50 ml of water to the reaction mixture, solid matters were obtained by filtration. Then a coloring matrix in an orange color, i.e., 3-(2',6'-dichloro-4'-nitrophenyl-azo)-9-(2'-hydroxyethyl)c arbazole was isolated therefrom by column chromatography (silica gel/benzene). The yield was 65%.

0.10 mol of the coloring matrix 3-(2',6'-dichloro-4'-nitrophenyl-azo)-9-(2'-hydroxyethyl)carbazole thus obtained, 0.013 mol of methacryloyl chloride and 0.013 mol of triethylenediamine were dissolved in 1 L of dry benzene and stirred at room temperature (about 25°C) for 24 hours. Then the reaction mixture was filtered and concentrated and 3-(2',6'-dichloro-4'-nitrophenylazo)-9-(2'-methacryloyloxy ethyl)carbazole represented by the formula (8): 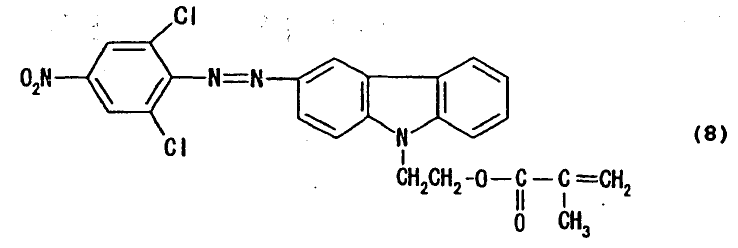 i.e., a colorant was isolated by column chromatography (silica gel/benzene). The yield was 95%.

0.01% by weight of the colorant thus obtained, 54% by weight of ethylene glycol phenyl ether acrylate, 39.7% by weight of n-butyl methacrylate, 4.0% by weight of n-butyl acrylate, 2.0% by weight of 1,4-butanediol dimethacrylate employed as a crosslinking agent, 0.3% by weight of 2-(2'-hydroxy-5'-methacrylyloxypropyl-3'-tert-butylphenyl) - 5-chloro-2H-benzotriazole employed as an UV absorber and an appropriate amount of 2,2-azobisisobutyronitrile employed as a polymerization initiator were mixed together and the resultant mixture was introduced into a test tube. Then it was polymerized in a thermostat at 60°C for 24 ours, in an air oven at 95°C for 24 hours and in an vacuum oven at 95°C. Thus, a soft base material for intraocular lenses colored in orange was obtained.

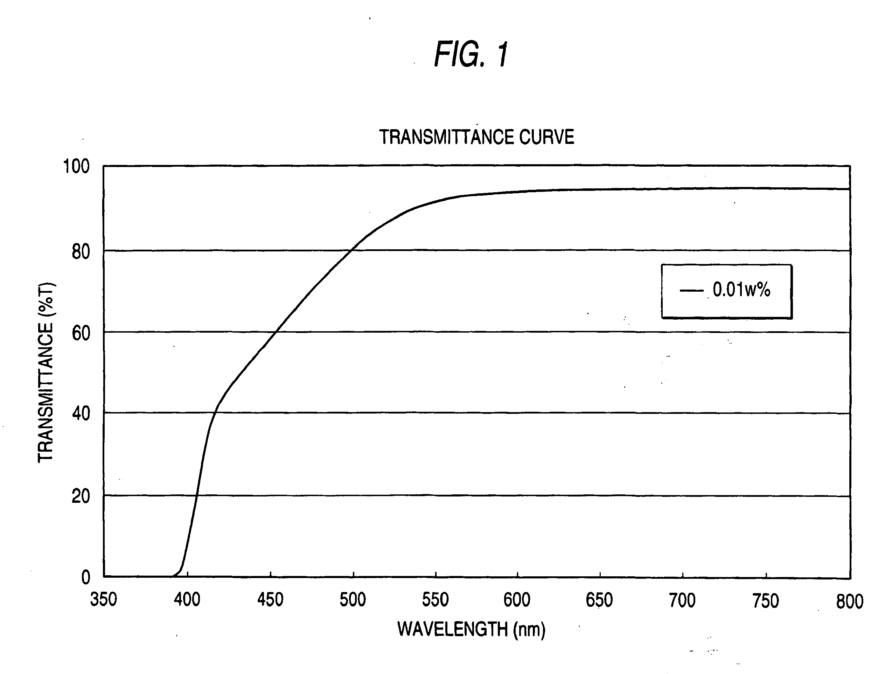

The soft base material for intraocular lenses thus obtained was processed into a plate of 6 mm in diameter and 1 mm in thickness. Then its transmittance was measured (Spectrophotometer Model U-4000 manufactured by HITACHI). Fig. 1 shows the results. As shown in Fig. 1, this base material absorbed almost all rays of 350 nm to 400 nm in wavelength in the UV range. Also, absorption of rays of 400 nm to 500 nm in wavelength was observed. Thus, it showed ray absorption characteristics similar to the inherent characteristics of human crystalline lens.

The obtained plate was stored in an air oven at 60°C for 72 hours in the state of being immersed in acetone. After heating and storing for 72 hours, the plate was taken out and its appearance was observed. As a result, no discoloration was found out. Further, the transmittance was measured. As a result, the transmittance had been scarcely changed.

### (Comparative Example 1)

A soft base material for intraocular lenses colored in orange was obtained under the same conditions as in Example 1 but substituting the coloring matrix obtained in Example 1 by 3-(2',6'-dichloro-4'-nitrophenyl-azo)-9-(2'-hydroxyethyl)carbazole. The intraocular lens base material thus obtained was processed into a plate of 6 mm in diameter and 1 mm in thickness. Then it was treated with acetone as in Example 1. After the completion of the acetone-treatment, the plate was completely decolored.

### (Comparative Example 2)

A soft base material for intraocular lenses colored in yellow was obtained under the same conditions as in Example 1 but substituting the colorant by Yellow AG (manufactured by NIPPON KAYAKU, yellow color). The intraocular lens base material thus obtained was processed into a plate of 6 mm in diameter and 1 mm in thickness. Then it was treated with acetone as in Example 1. After the completion of the acetone-treatment, the plate was completely decolored.

### (Comparative Example 3)

A soft base material for intraocular lenses colored in red was obtained under the same conditions as in Example 1 but substituting the colorant by Sudan III (manufactured by KISHIDA KAGAKU, red color). The intraocular lens base material thus obtained was processed into a plate of 6 mm in diameter and 1 mm in thickness. Then it was treated with acetone as in Example 1. After the completion of the acetone-treatment, the plate was completely decolored.

As discussed above, the colorant according to the invention can be appropriately used in flexible ocular lenses such as contact lenses or intraocular lenses without being eluted from the colored ocular lenses.

## Claims

1. A colorant for ocular lenses represented by the following formula (1): 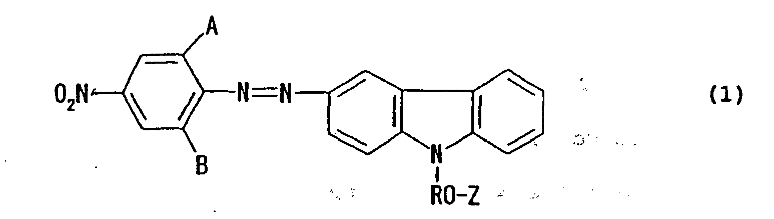 wherein A and B are each selected from the group consisting of halogens, a cyano group, a nitro group, alkyl groups, alkylsulfonyl groups and alkoxy groups; R represents a linear or branched alkylene having 1 to 5 carbon atoms; and Z is selected from the group consisting of a (meth)acryl group, a vinyl group, an allyl group and a chemical structure having such a polymerizable group.

2. The colorant according to claim 1, wherein A and B are Cl, and Z is a (meth)acryl group.

3. A colored ocular lens containing a base material and from 0.001% by weight to 0.1% by weight of a colorant, based on a total weight of the base material and the colorant, the colorant being represented by the following formula (1),: 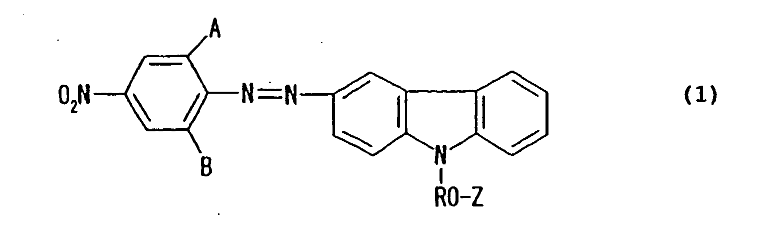 wherein A and B are each selected from the group consisting of halogens, a cyano group, a nitro group, alkyl groups, alkylsulfonyl groups and alkoxy groups; R represents a linear or branched alkylene having 1 to 5 carbon atoms; and Z is selected from the group consisting of a (meth)acryl group, a vinyl group, an allyl group and a chemical structure having such a polymerizable group.

4. The colored ocular lens according to claim 3, wherein A and B are Cl, and Z is a (meth)acryl group.

5. The colored ocular lens according to claim 3 or 4, which contains from 0.005% by weight to 0.05% by weight of the colorant represented by the formula (1), based on a total weight of the base material and the colorant.

6. The colored ocular lens according to claim 3 or 4, wherein the base material has a glass transition temperature of 10°C or lower.

7. The colored ocular lens according to claim 3 or 4, wherein the base material has a glass transition temperature of 5°C or lower.

## Patentansprüche

1. Farbstoff für Okularlinsen, repräsentiert durch die folgende Formel (1): 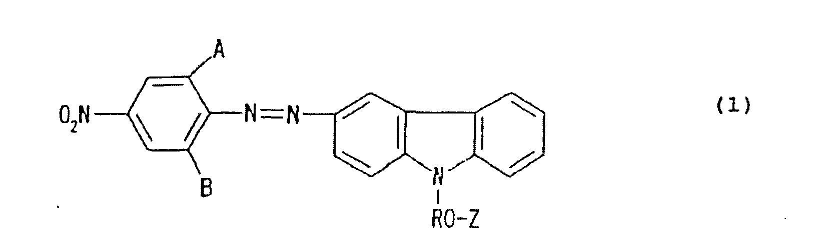 worin A und B jeweils ausgewählt sind aus der Gruppe bestehend aus Halogenen, einer Cyanogruppe, einer Nitrogruppe, Alkylgruppen, Alkylsulfonylgruppen und Alkoxygruppen; R ein gerades oder verzweigtes Alkylen mit 1 bis 5 Kohlenstoffatomen repräsentiert; und Z ausgewählt ist aus der Gruppe bestehend aus einer (Meth)acrylgruppe, einer Vinylgruppe, einer Allylgruppe und einer chemischen Struktur, die eine solche polymerisierbare Gruppe aufweist.

2. Farbstoff gemäß Anspruch 1, worin A und B Cl und Z eine (Meth)acrylgruppe ist.

3. Gefärbte Okularlinse, enthaltend ein Basismaterial und zwischen 0,001 Gew.-% und 0,1 Gew.-% eines Farbstoffes, basierend auf dem Gesamtgewicht des Basismaterials und des Farbstoffes, wobei der Farbstoff durch die folgende Formel (1) repräsentiert ist: 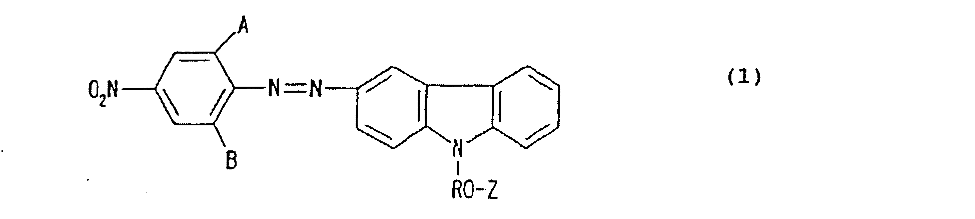 worin A und B jeweils ausgewählt sind aus der Gruppe bestehend aus Halogenen, einer Cyanogruppe, einer Nitrogruppe, Alkylgruppen, Alkylsulfonylgruppen und Alkoxygruppen; R ein gerades oder verzweigtes Alkylen mit 1 bis 5 Kohlenstoffatomen repräsentiert; und Z ausgewählt ist aus der Gruppe bestehend aus einer (Meth)acrylgruppe, einer Vinylgruppe, einer Allylgruppe und einer chemischen Struktur, die eine solche polymerisierbare Gruppe aufweist.

4. Gefärbte Okularlinse gemäß Anspruch 3, worin A und B Cl und Z eine (Meth)acrylgruppe ist.

5. Gefärbte Okularlinse gemäß Anspruch 3 oder 4, die zwischen 0,005 Gew.-% und 0,05 Gew.-% des durch die Formel (1) repräsentierten Farbstoffes enthält, basierend auf dem Gesamtgewicht des Basismaterials und des Farbstoffes.

6. Gefärbte Okularlinse gemäß Anspruch 3 oder 4, worin das Basismaterial eine Glasübergangstemperatur von 10°C oder darunter aufweist.

7. Gefärbte Okularlinse gemäß Anspruch 3 oder 4, worin das Basismaterial eine Glasübergangstemperatur von 5°C oder darunter aufweist.

## Revendications

1. Colorant pour lentilles oculaires représenté par la formule (1) suivante : 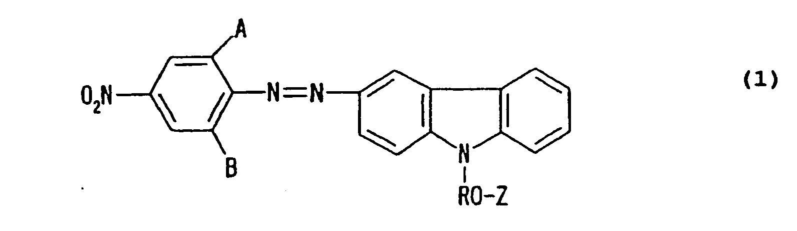 où A et B sont choisis chacun dans le groupe consistant en les halogènes, un groupe cyano, un groupe nitro, les groupes alkyle, les groupes alkylsulfonyle et les groupes alcoxy ; R représente un alkylène linéaire ou ramifié ayant 1 à 5 atomes de carbone ; et Z est choisi dans le groupe consistant en un groupe (méth)acryle, un groupe vinyle, un groupe allyle et une structure chimique ayant un tel groupe polymérisable.

2. Colorant selon la revendication 1 où A et B sont Cl, et Z est un groupe (méth)acryle.

3. Lentille oculaire colorée contenant un matériau de base et de 0,001 % en masse à 0,1 % en masse d'un colorant, sur la base de la masse totale du matériau de base et du colorant, le colorant étant représenté par la formule (1) suivante : 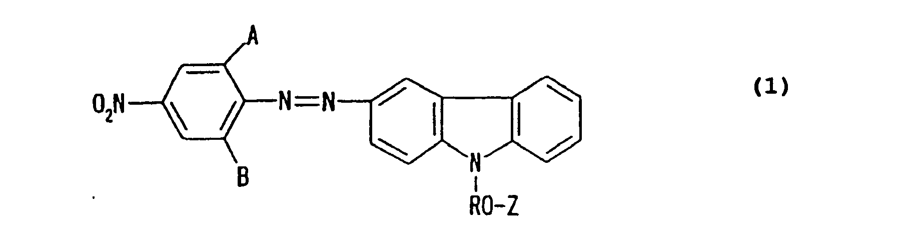 où A et B sont choisis chacun dans le groupe consistant en les halogènes, un groupe cyano, un groupe nitro, les groupes alkyle, les groupes alkylsulfonyle et les groupes alcoxy ; R représente un alkylène linéaire ou ramifié ayant 1 à 5 atomes de carbone ; et Z est choisi dans le groupe consistant en un groupe (méth)acryle, un groupe vinyle, un groupe allyle et une structure chimique ayant un tel groupe polymérisable.

4. Lentille oculaire colorée selon la revendication 3 où A et B sont Cl, et Z est un groupe (méth)acryle.

5. Lentille oculaire colorée selon la revendication 3 ou 4 qui contient de 0,005 % en masse à 0,05 % en masse de colorant représenté par la formule (1), sur la base de la masse totale du matériau de base et du colorant.

6. Lentille oculaire colorée selon la revendication 3 ou 4 où le matériau de base a une température de transition vitreuse de 10°C ou plus basse.

7. Lentille oculaire colorée selon la revendication 3 ou 4 où le matériau de base a une température de transition vitreuse de 5°C ou plus basse.
